# FASCICULE DE BREVET EUROPEEN

(11) **EP 1 972 549 B1**
(45) Date de publication et mention de la délivrance du brevet: **23.09.2009**
(21) Numéro de dépôt: 08102826.8
(22) Date de dépôt: 20.03.2008
(51) Int. Cl.: B64C 13/28, F16H 25/20

(54) **Pérféctionnements à la détection d'effort sur un actionneur de commande de vol**
Perfektionierungen der Erfassung des Drucks auf ein Stellglied zur Flugsteuerung
Improved load detection on a flight control actuator

(30) Priorité: 23.03.2007 FR 0754003
(43) Date de publication de la demande: 24.09.2008
(62) Demande divisionnaire de: 08165087.1
(73) Titulaire: Goodrich Actuation Systems SAS, 78530 Buc (FR)
(72) Inventeur: Moalic, Jean-Marc, 95210, SAINT GRATIEN (FR); Turpin, Pierre, 78310, Maurepas (FR); Sellier, Philippe, 27150, Etrepagny (FR)
(74) Mandataire: Callon de Lamarck, Jean-Robert

(56) Documents cités:
- EP-A1- 1 557 588
- FR-A1- 2 858 035
- US-A- 3 695 096

## Description

### DOMAINE TECHNIQUE GENERAL ET ART ANTERIEUR

La présente invention est relative à la détection d'effort sur un actionneur de commande de vol.

Notamment, mais non limitativement, elle concerne la détection de la reprise d'effort par une voie secondaire d'un actionneur de commande de vol d'aéronef et trouve notamment avantageusement application dans le cas d'actionneur de type THSA (« Trimmable Horizontal Stabilizer Actuator »).

On sait que classiquement, de tels actionneurs comportent deux voies mécaniques, l'une primaire, l'autre secondaire, cette dernière étant destinée à reprendre l'effort lorsque la voie primaire est défaillante.

En fonctionnement sur la voie primaire, les efforts transitent par une vis à billes ou à rouleaux creuse. Cette caractéristique permet d'y loger une tige de sécurité (barre dite « fail safe »), rainurée à ses extrémités et reliée avec jeu à la vis. Cette structure assure la continuité de la transmission des efforts et de la rotation de l'ensemble (en évitant une séparation axiale des éléments de la vis, en cas de rupture de la vis elle-même). La vis se termine à une de ses extrémités par une pièce d'attache par laquelle elle est reliée à l'aéronef (attache haute primaire). En cas de défaillance de celle-ci, les efforts sont repris par la tige de sécurité dont l'extrémité est une forme mâle (par exemple une sphère) disposée dans une forme femelle d'une pièce d'attache de la voie secondaire (attache haute secondaire). Cette attache secondaire est elle-même reliée à l'aéronef au moyen d'une pièce d'attache avion différente de celle utilisée pour supporter la voie primaire.

En fonctionnement « normal », lorsque la voie primaire porte l'effort, il existe un jeu entre la forme mâle qui termine la tige de sécurité et la forme femelle de la pièce d'attache de la voie secondaire, de sorte que la pièce d'attache secondaire avion ne supporte pas d'autre effort que le poids de la pièce d'attache femelle secondaire du THSA.

Lors de la défaillance de la voie primaire, la forme mâle qui termine la vis vient en contact avec la forme femelle de la pièce d'attache de la voie secondaire ce qui entraine la reprise d'effort par la chape de fixation secondaire avion.

On connait déjà, par exemple par FR 2.858.035 ou EP 1.557.588, des dispositifs pour la détection de la reprise d'effort par une voie secondaire.

Toutefois, les solutions proposées à ce jour sont généralement fondées sur une détection du déplacement ou de l'écartement entre différentes pièces.

On souhaite pouvoir proposer des solutions qui permettent d'encore améliorer la fiabilité des détections des mises sous charge des voies secondaires.

On souhaite également pouvoir proposer des solutions d'intégration moins complexe que les solutions précitées à capteurs de détection de déplacement ou d'écartement.

On connaît par ailleurs du document US 3695096 des vis instrumentées présentant un trou axial équipé de jauges de contrainte destinées à permettre de mener en permanence la contrainte supportée par une pièce de jonction.

### PRESENTATION DE L'INVENTION

Un but de l'invention est donc de proposer une solution pour détecter la reprise d'effort, afin notamment d'informer le pilote de ce que la voie secondaire a pris le relais de la voie primaire.

Un autre but de l'invention est en particulier de résoudre cette problématique de détection d'une façon simple et efficace.

Un autre but encore de l'invention est de proposer une solution permettant d'éviter toute détection intempestive, et ce alors même que l'actionneur doit pouvoir être soumis à des environnements extérieurs sévères, notamment mécaniques, chimiques, climatiques ou électriques.

Un autre but encore de l'invention est de proposer une solution particulièrement simple en terme d'intégration.

Plus particulièrement, l'invention propose un actionneur de commande de vol selon la revendication 1.

Ainsi, on détecte les contraintes sur les pièces assurant l'attache haute de la voie secondaire pour mettre en évidence une reprise d'effort par la voie secondaire.

Une telle solution a l'avantage d'être fiable et peu compliquée à implémenter.

Par ailleurs, dans un mode de réalisation qui ne se veut pas limitatif, un capteur apte à détecter un effort est disposé sur au moins une vis de fixation assurant l'attache haute de la voie secondaire et/ou sur une bague rapportée sur celle-ci. On notera qu'un avantage important de cette solution est qu'elle s'intègre aisément sur des équipements existants, sans nécessiter de modifications substantielles sur ceux-ci (il suffit pour l'essentiel de changer la vis ou l'ensemble vis/bague) et en particulier sans modification des chapes de fixation de l'avion et de l'actionneur.

Le capteur apte à détecter un effort peut comporter une ou plusieurs jauges extenso-métriques, ces jauges étant aptes à se déformer sous l'effet de la contrainte générée lorsque la voie secondaire est chargée et reprend l'effort.

En particulier, il peut être prévu au moins deux ou trois membranes à jauges de contrainte disposées sur le diamètre extérieur de la vis à 180° ou à 120° respectivement et au droit du trou d'une chape de la pièce d'attache dans lequel elle est reçue, ledit montage présentant au niveau du trou de la chape une pièce du type bague avec éléments en saillie aptes à mettre en contrainte une ou plusieurs des membranes au moins dans certaines configurations de mise sous charge.

Un dispositif de type boite à ressort pourra être ajouté sur la vis de manière à rendre indépendant la mise sous charge des membranes de l'effort couple de serrage appliqué à la vis lors du montage.

Sur un ensemble comportant deux vis équipées on pourra au moyen d'un boitier électronique traiter l'un ou les deux signaux de manière quantitative ainsi que relative cela pour fiabiliser la pertinence de la mesure.

L'invention concerne également l'utilisation d'au moins une vis de fixation qui comporte des moyens formant capteur apte à détecter un effort ou d'un ensemble composé d'une vis de fixation et d'une bague comportant de tels moyens, pour la fixation de l'attache haute de la voie secondaire d'un actionneur de commande de vol.

L'actionneur est en outre avantageusement complétée par les différentes caractéristiques des revendications 2 à 8.

L'invention concerne en outre l'utilisation d'une vis munie d'une jauge de contrainte pour la détection de la mise sans charge de la voie secondaire d'un actionneur de commande de vol selon la revendication 9.

### PRESENTATION DES LIGURES

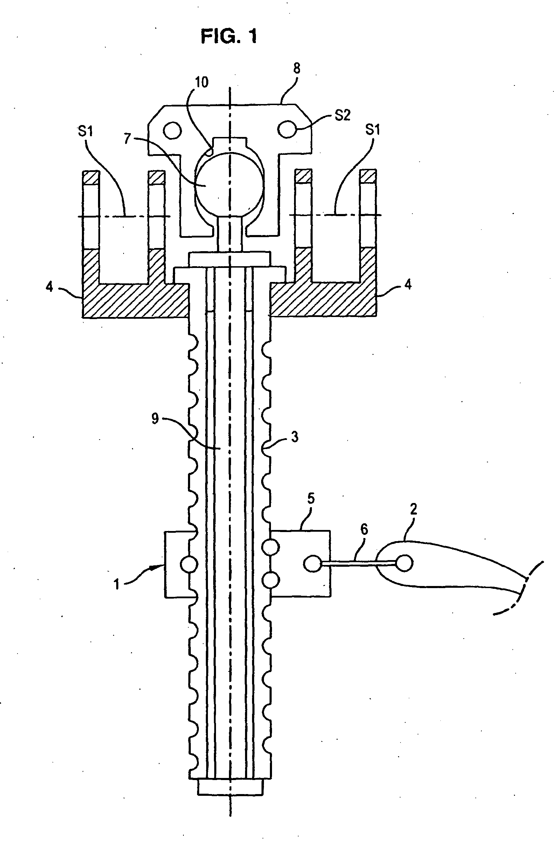

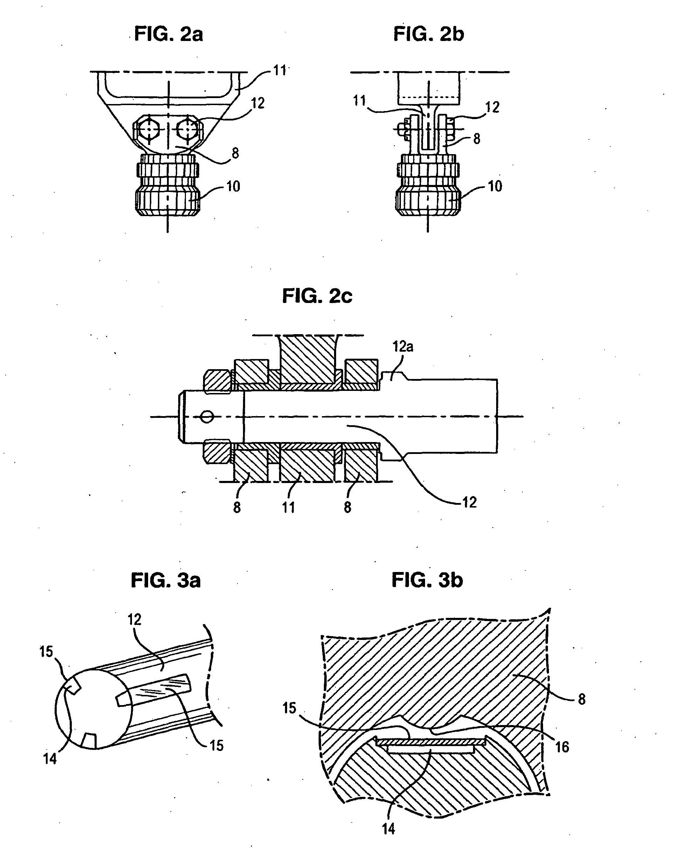

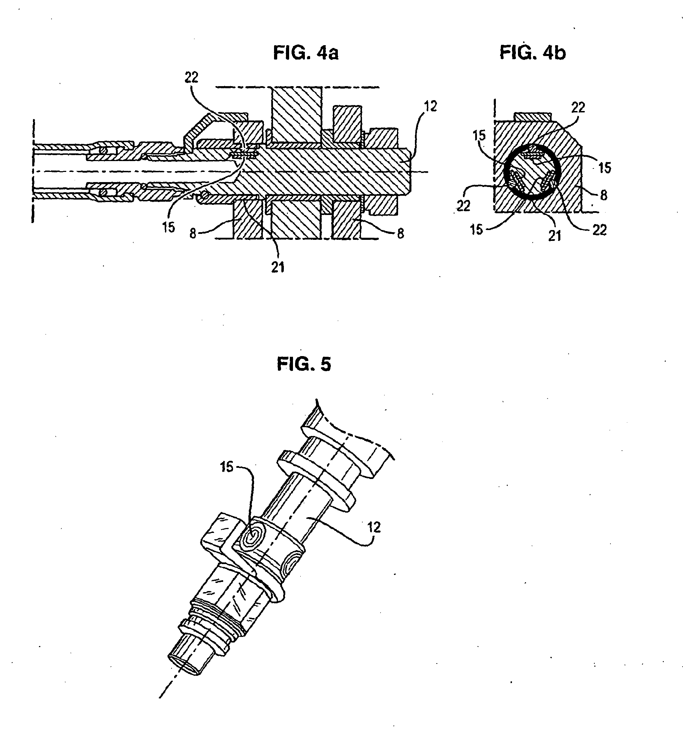

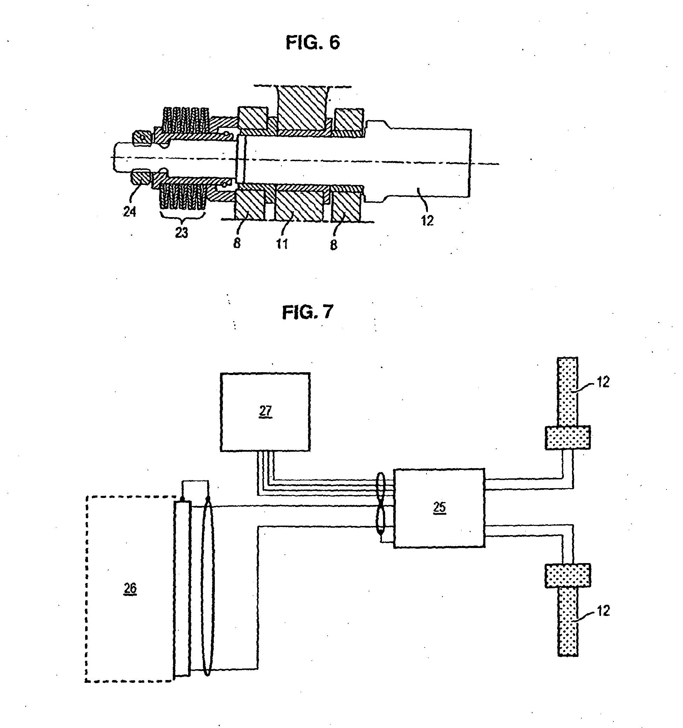

D'autres caractéristiques et avantages de l'invention ressortiront encore de la description qui suit, laquelle est purement illustrative et non limitative, et doit être lue en regard des dessins annexés sur lesquels :
■ la figure 1 est une représentation schématique illustrant le principe d'un actionneur ;
■ les figures 2a à 2c sont des représentations schématiques en vue de côté et en coupe illustrant la fixation de l'attache haute de la voie secondaire ;
■ les figures 3a et 3b illustrent un mode de réalisation possible pour les moyens de détection disposés au niveau des pièces participant à l'attache haute telle qu'illustrées sur les figures 2a à 2c ;
■ les figures 4a et 4b sont des représentations schématiques en coupe illustrant un autre mode de réalisation possible de l'invention ;
■ la figure 5 est une représentation schématique en perspective du mode de réalisation des figures 4a et 4b ;
■ la figure 6 illustre un autre mode de réalisation encore ;
■ la figure 7, enfin, représente schématiquement un montage d'alimentation électrique et de traitement auquel sont reliés les capteurs associés à deux vis équipées du type de celles décrites en référence aux figures précédentes.

### DESCRIPTION D'UN OU PLUSIEURS EXEMPLES DE REALISATION

### STRUCTURE GENERALE DE L'ACTIONNEUR

On a représenté schématiquement sur la figure 1 un actionneur 1 de commande de vol avec une voie primaire et une voie secondaire.

Cet actionneur 1 est par exemple un vérin de type THSA, pour la commande d'un plan 2 horizontal variable d'aéronef.

Il comporte une voie primaire qui comprend une vis creuse 3 reliée à une extrémité, par un système à cardan 4, à la structure S1 de l'avion. La voie primaire comprend également un écrou 5, qui coopère avec la vis 3 en étant monté sur celle-ci et qui est relié au plan 2 à commander, par exemple par un autre système à cardan 6.

Une tige de sécurité 9 s'étend à l'intérieur de la vis creuse 3. Cette tige 9 se termine par une tête 7 sphérique placée avec jeu à l'intérieur d'une forme sphérique femelle 10 d'une pièce d'attache 8 de la voie secondaire, cette pièce d'attache 8 étant elle-même fixée à une structure S2 de l'avion.

Cet actionneur est par exemple commandé par un moteur hydraulique ou électrique M, qui entraîne la vis 3 en rotation et déplace l'écrou 5 en translation, ce dernier étant à cet effet bloqué en rotation. Le déplacement en translation de l'écrou 5 permet ainsi de commander le basculement que l'on souhaite donner au plan horizontal variable 2.

### FIXATION DE L'ATTACHE HAUTE SECONDAIRE

On a représenté sur les figures 2a, 2b et 2c la fixation de la pièce d'attache 8 de la voie secondaire sur une chape 11 supérieure de fixation de la structure S2 de l'avion.

Ainsi qu'on peut le voir sur ces figures, la pièce 8 est un étrier qui comporte deux chapes entre lesquelles est reçue la chape 11. Deux vis 12 parallèles s'étendent à travers les chapes de la pièce 8 et la pièce 11, l'ensemble étant fixé par serrage entre des têtes 12a qui terminent les vis 12 à une extrémité et des écrous 13 dont le filetage coopère avec celui des vis 12 à leurs autres extrémités.

### DETECTION DE LA MISE SOUS CHARGE

Des moyens de détection apte à détecter un effort sont disposés sur au moins l'une des vis 12 ou au moins l'une des deux chapes de la pièce 8 pour détecter la reprise d'effort par la voie secondaire.

Les figures 3a et 3b illustrent une solution dans laquelle l'une des vis 12 présente au droit d'une des chapes de la pièce d'attache 8 plusieurs rainures 14 en creux au niveau desquels s'étendent des lames souples 15 porteuses de jauges de contrainte.

La chape correspondante de la pièce d'attache 8 comporte quant à elle un certain nombre de poinçons 16 en saillie qui, lorsque l'effort est supporté par la voie secondaire et que la pièce d'attache 8, la chape 11 et les vis 12 sont en charge soit en compression, soit en traction, viennent en appui sur la vis et déforment les lames 15 à jauges de contrainte.

Les lames à jauges de contraintes sont par exemple réparties régulièrement sur la périphérie de la vis 12. Elles peuvent être au nombre de deux, réparties de façon diamétralement opposées, c'est-à-dire à 180° l'un de l'autre sur une même périphérie de la vis 12. Elles peuvent également être au nombre de trois (réparties à 120° les unes des autres sur la vis), voire être en un nombre plus important de façon à pouvoir détecter des efforts qui ne seraient pas uniquement des efforts en compression ou traction, mais qui seraient dirigés avec un certain angle par rapport à la direction principale de traction/compression. On notera en particulier qu'une configuration à trois jauges de contrainte ou plus permet de récupérer un signal de mise sous charge quelle que soit la direction dans laquelle cette mise sous charge intervient.

Les poinçons 16 ont quant à eux la même répartition que les lames à jauges de contrainte.

Les lames à jauges de contrainte sont par exemple des membranes souples en feuillard d'acier inoxydable sur lesquelles les jauges de contrainte sont collées ou déposées.

On notera que des solution à jauges de contrainte du type de celles qui viennent d'être décrites ont l'avantage de permettre de ne pas affaiblir le montage de fixation de l'attache haute secondaire - lequel doit être capable de supporter des efforts de une à plusieurs dizaines de Tonnes, tout en permettant la détection d'efforts de l'ordre de une à plusieurs dizaines de Kg.

Par ailleurs, en complément des différentes variantes qui viennent d'être décrites et ainsi qu'illustré sur la figure 6, on interpose avantageusement entre l'écrou 24 associé là la vis 12 et la chape de la pièce 8 qu'il vient serrer un ensemble (ou boitier) ressort 23. Ce boitier ressort 23 permet de répartir l'effort de serrage et rend indépendant la mise sous charge des jauges de l'effort couple de serrage appliqué à la vis lors du montage. On évite ainsi des fausses détections dues aux conditions de montage.

Egalement, on peut envisager d'équiper soit une seule vis, soit les deux vis 12, soit encore la chape 11 ou la pièce d'attache 8, et de façon plus générale de multiplier les différentes mesures réalisées par différents moyens de détection, de façon à disposer d'un système redondant et le cas échéant travailler en différentiel.

La figure 7 explicite quant à elle un montage possible avec deux vis de fixation 12 équipées de capteurs du type de celles proposées dans les figures précédentes.

Dans ce montage, les capteurs des vis 12 sont reliés à un boitier électronique 25 (qui intègre par exemple un calculateur). Ce boitier électronique 25 reçoit une alimentation électrique d'une source 26. Il met en oeuvre un premier traitement sur les mesures des capteurs et renvoie des informations, par exemple numériques, à un calculateur 27 de l'aéronef.

Ce boitier 25 peut par exemple mettre en oeuvre sur les signaux qu'il reçoit des capteurs d'effort des deux vis, des tests de cohérence qualitative ou quantitative.

Comme on l'aura compris, les solutions qui viennent d'être décrites ont l'avantage d'être simple et d'une grande fiabilité.

En outre, la détection grâce à des capteurs apte à détecter un effort sur les vis de fixation ou des bagues associées a l'avantage d'être d'une grande facilité d'implémentation.

Elle peut notamment être mise en place sur des actionneurs existants, sans nécessiter de modifications substantielles sur ceux-ci.

On notera enfin que s'agissant des solutions où les jauges sont portées par des vis de fixation, celles-ci ont le grand avantage d'être faciles à mettre en place sur des actionneurs déjà en service, notamment dans le cadre d'un réfrofit, puisqu'il suffit pour cela de remplacer les vis de fixation de l'actionneur par des vis équipées de jauges.

Enfin, l'invention a été décrite ici dans le cas de la détection de la reprise d'effort par la voie secondaire d'un actionneur de commande de vol, notamment d'un actionneur THSA.

Toutefois l'utilisation de vis équipées du type de celles qui viennent d'être décrites, trouvent avantageusement application plus largement dans le cadre de la détection d'effort sur toute fixation d'attache.

## Revendications

1. Actionneur de commande de vol présentant une voie primaire et une voie secondaire apte à reprendre l'effort de la voie primaire en cas de défaillance de celle-ci, la voie primaire comportant une vis, la vis se terminant par une pièce d'attache de la voie primaire, la voie secondaire comportant une tige de sécurité de reprise d'effort traversant la vis, cette tige se terminant par une forme mâle reçue - avec jeu lorsque la voie primaire porte l'effort - dans une forme femelle d'une pièce d'attache de la voie secondaire, la forme mâle qui termine la tige et la forme femelle de la pièce d'attache étant sphériques ou de révolution, des moyens de type à vis de fixation et écrou étant aptes à assurer la fixation de cette pièce d'attache, ledit actionneur comprenant des moyens pour la détection de la mise sous charge de la voie secondaire, **caractérisé en ce que** lesdits moyens de détection comportent au moins un capteur apte à détecter un effort lors d'une mise sous contrainte de la voie secondaire, ledit capteur comprenant une jauge de contrainte (14, 15) et au moins un élément complémentaire en saillie (16, 22) apte à mettre en contrainte ladite jauge (14, 15) au moins dans certaines configurations de mise sous charge de la voie secondaire de l'actionneur de commande de vol lors d'une rupture de la voie primaire, lesdits moyens de détection que constitue ledit capteur étant disposés sur au moins une vis de fixation (12) ou au moins une chape de la pièce d'attache (8) de la voie secondaire, ou encore sur une bague intermédiaire (21) rapportée sur cette vis de de fixation (12).

2. Actionneur selon la revendication 1, **caractérisé en ce que** lesdits moyens de détection comportent au moins une lame à jauge de contrainte (14, 15) disposée sur un renfoncement que présente une vis de fixation, en périphérie de ladite vis, au droit du trou d'une chape de la pièce d'attache (8) de la voie secondaire dans lequel elle est reçue.

3. Actionneur selon la revendication 1, **caractérisé en ce qu'**il comporte au moins trois jauges de contrainte (14, 15) réparties régulièrement autour d'une périphérie de la vis.

4. Actionneur selon la revendication 2, **caractérisé en ce qu'**un élément complémentaire en saillie est un poinçon (16) porté par la chape de la pièce d'attache (8).

5. Actionneur selon la revendication 2, **caractérisé en ce qu'**un élément complémentaire en saillie est une bille (22) portée par une bague disposée au niveau du trou de la chape de la pièce d'attache (8).

6. Actionneur selon la revendication 1, **caractérisé en ce qu'**au moins une lame à jauge de contrainte est portée par une bague interposée entre la vis et la chape de la pièce d'attache.

7. Actionneur selon la revendication 1, **caractérisé en ce qu'**un élément complémentaire en saillie est porté par une membrane d'une jauge de contrainte.

8. Actionneur selon la revendication 1, **caractérisé en ce qu'**il comporte plusieurs moyens de détection disposés sur une ou plusieurs des pièces assurant la fixation de l'attache haute de la voie secondaire pour assurer des mesures redondantes ou complémentaires.

9. Utilisation d'une vis de fixation (12) pour la détection de la mise sous charge de la voie secondaire d'un actionneur de commande de vol, la vis de fixation (12) comportant au moins une lame à jauge de contrainte (14, 15) disposée sur un renfoncement à sa périphérie et substituée à une vis de fixation d'une pièce d'attache de la voie secondaire de l'actionneur de commande de vol.

## Claims

1. A flight-control actuator with a primary path and a secondary path that is designed to take up the effort of the primary path in the event of failure of the latter, where the primary path includes a screw, with the screw ending in an attachment part of the primary path, with the secondary path including an effort take-up security rod passing through the screw, with this rod ending in a male shape accommodated - with play when the primary path is carrying the effort
- in a female shape of an attachment part of the secondary path, with the male shape that terminates the rod and the female shape of the attachment part being spherical or of revolution, with means of the fixing screw and nut type being designed to perform the fixing of this attachment part, with the said actuator including means to detect the loading of the secondary path, **characterised in that** the said means of detection include at least one sensor designed to detect an effort during the stressing of the secondary path, with the said sensor including a stress gauge (14, 15) and at least one additional projecting element (16, 22) designed to stress the said gauge (14, 15) at least in certain loading configurations of the secondary path of the flight-control actuator during a break in the primary path, with the said means of detection composed of the said sensor being positioned on at least one fixing screw (12) or at least one yoke of the attachment part (8) of the secondary path, or even on an intermediate ring (21) attached to this fixing screw (12).

2. An actuator according to claim 1,
**characterised in that** the said means of detection include at least one stress-gauge element (14, 15) positioned in a recess presented by a fixing screw, on the periphery of the said screw, opposite to the hole of a yoke of the attachment part (8) of the secondary path in which it is accommodated.

3. An actuator according to claim 1,
**characterised in that** it includes at least three stress gauges (14, 15) distributed regularly around a periphery of the screw.

4. An actuator according to claim 2,
**characterised in that** an additional projecting element is a boss (16) carried by the yoke of the attachment part (8).

5. An actuator according to claim 2,
**characterised in that** an additional projecting element is a ball (22) carried by a ring positioned at the level of the hole in the yoke of the attachment part (8).

6. An actuator according to claim 1,
**characterised in that** at least one stress-gauge element is carried by a ring inserted between the screw and the yoke of the attachment part.

7. An actuator according to claim 1,
**characterised in that** an additional projecting element is carried by a membrane of a stress gauge.

8. An actuator according to claim 1,
**characterised in that** it includes several means of detection positioned on one or more of the parts used to fix the top attachment of the secondary path in order to provide measurement redundancy or additional measurements.

9. The use of a fixing screw (12) to detect the loading of the secondary path of a flight-control actuator, with the fixing screw (12) including at least one stress-gauge element (14, 15) positioned in a recess on its periphery and substituted for a fixing screw of an attachment part of the secondary path of the flight-control actuator.

## Patentansprüche

1. Stellglied zur Flugsteuerung, einen primären Weg und einen sekundären Weg aufweisend, der imstande ist, den Druck des primären Weges im Falle eines Ausfalls desselben aufzunehmen, wobei der primäre Weg eine Schraube umfasst, wobei die Schraube in einem Verbindungsteil des primären Weges endet, wobei der sekundäre Weg einen Sicherheitsstift zur Übernahme des Drucks umfasst, der die Schraube durchquert, wobei dieser Stift in einer männlichen Form endet, die - mit Spiel, wenn der primäre Weg den Druck trägt -, in einer weiblichen Form eines Verbindungsteils des sekundären Wegs aufgenommen wird, wobei die männliche Form, die den Stift beendet und die weibliche Form des Verbindungsteils sphärisch oder umlaufend sind, wobei Mittel vom Typ Befestigungsschraube und Mutter imstande sind, die Befestigung dieses Verbindungsteils zu gewährleisten, wobei das Stellglied Mittel zur Erfassung der Unterdrucksetzung des sekundären Weges umfasst, **dadurch gekennzeichnet, dass** die Erfassungsmittel mindestens einen Sensor umfassen, der imstande ist, während der sekundäre Weg beansprucht wird, einen Druck zu erfassen, wobei der Sensor eine Beanspruchungsanzeige (14, 15) umfasst und mindestens ein hervorstehendes komplementäres Element (16, 22), das imstande ist, die Anzeige (14, 15) bei einer Unterbrechung des primären Wegs mindestens in einigen Konfigurationen der Unterdrucksetzung des sekundären Wegs des Stellglieds zur Flugsteuerung zu beanspruchen,
wobei die Erfassungsmittel, die den besagten Sensor ausmachen, auf mindestens einer Befestigungsschraube (12) oder mindestens einer Fläche des Verbindungsteils (8) des sekundären Wegs angeordnet sind, oder auch auf einem Zwischenring (21), der auf dieser Befestigungsschraube (12) aufgebracht ist.

2. Stellglied nach Anspruch 1, **dadurch gekennzeichnet, dass** die besagten Erfassungsmittel mindestens ein Beanspruchungsanzeigenplättchen (14, 15) umfassen, das auf einer Verstärkung angeordnet ist, die eine Befestigungsschraube auf der Peripherie der besagten Schraube gegenüber der Öffnung einer Fläche des Verbindungsteils (8) des sekundären Wegs, in der es aufgenommen wird, darstellt.

3. Stellglied nach Anspruch 1, **dadurch gekennzeichnet, dass** es mindestens drei Beanspruchungsanzeigen (14, 15) umfasst, die gleichmäßig um eine Peripherie der Schraube verteilt sind.

4. Stellglied nach Anspruch 2, **dadurch gekennzeichnet, das** ein hervorstehendes komplementäres Element ein Dorn (16) ist, der von der Fläche des Verbindungsteils (8) getragen wird.

5. Stellglied nach Anspruch 2, **dadurch gekennzeichnet, dass** ein hervorstehendes komplementäres Element eine Kugel (22) ist, die von einem Ring getragen wird, der auf Ebene der Öffnung der Fläche des Verbindungsteils (8) angeordnet ist.

6. Stellglied nach Anspruch 1, **dadurch gekennzeichnet, dass** mindestens eine Beanspruchungsanzeige von einem Ring zwischen der Schraube und der Fläche des Verbindungsteils getragen wird.

7. Stellglied nach Anspruch 1, **dadurch gekennzeichnet, dass** ein hervorstehendes komplementäres Element von einer Membran einer Beanspruchungsanzeige getragen wird.

8. Stellglied nach Anspruch 1, **dadurch gekennzeichnet, dass** es mehrere Erfassungsmittel umfasst, die auf einem oder mehreren Teilen angeordnet sind, die die Befestigung der hohen Verbindung des sekundären Wegs gewährleisten, um redundante oder komplementäre Messungen zu gewährleisten.

9. Verwendung einer Befestigungsschraube (12) zur Erfassung der Unterdrucksetzung des sekundären Wegs eines Stellglieds zur Flugsteuerung, wobei die Befestigungsschraube (12) mindestens ein Beanspruchungsanzeigenplättchen (14, 15) umfasst, das auf einer Verstärkung auf ihrer Peripherie angeordnet ist und eine Befestigungsschraube eines Verbindungsteils des sekundären Wegs des Stellglieds zur Flugsteuerung ersetzt.
